# EUROPÄISCHE PATENTSCHRIFT

(11) **EP 3 286 690 B1**
(45) Veröffentlichungstag und Bekanntmachung des Hinweises auf die Patenterteilung: **01.09.2021**
(21) Anmeldenummer: 16717900.1
(22) Anmeldetag: 18.04.2016
(51) Int. Cl.: G06K 9/00, G06K 9/20, B42D 25/305, B42D 25/309, G03B 17/02, G03B 17/17

(54) **IDENTIFIKATIONSDOKUMENT, IDENTIFIKATIONSVORRICHTUNG UND ENTSPRECHENDE VERFAHREN**
IDENTIFICATION DOCUMENT, IDENTIFICATION DEVICE AND CORRESPONDING METHODS
DOCUMENT D'IDENTIFICATION, DISPOSITIF D'IDENTIFICATION ET PROCÉDÉS CORRESPONDANTS

(30) Priorität: 24.04.2015 DE 102015106358
(43) Veröffentlichungstag der Anmeldung: 28.02.2018
(73) Patentinhaber: Bundesdruckerei GmbH, 10969 Berlin (DE)
(72) Erfinder: WOLF, Andreas, 13158 Berlin-Rosenthal (DE); HELBIG, Jörg, 01160 Dresden (DE); ULLRICH, Jörg, 07907 Dittersdorf (DE)
(74) Vertreter: Patentship Patentanwaltsgesellschaft mbH
(86) Internationale Anmeldenummer: PCT/EP2016/058508
(87) Internationale Veröffentlichungsnummer: WO 2016/169879

(56) Entgegenhaltungen:
- DE-A1-102009 027 123
- GB-A- 2 250 604
- JP-A- 2000 244 794
- JP-A- 2005 210 217
- JP-A- 2007 226 549
- US-A- 5 400 097
- US-A1- 2004 001 709
- US-A1- 2009 080 695
- US-A1- 2012 163 791
- HONG HUAM ET AL: "Dual-sensor foveated imaging system", APPLIED OPTICS, OPTICAL SOCIETY OF AMERICA, WASHINGTON, DC; US, Bd. 47, Nr. 3, 20. Januar 2008 (2008-01-20), Seiten 317-327, XP001511036, ISSN: 0003-6935, DOI: 10.1364/AO.47.000317
- FAYMAN J A ET AL: "Zoom tracking and its applications", MACHINE VISION AND APPLICATIONS, SPRINGER VERLAG, DE, Bd. 13, Nr. 1, 2001, Seiten 25-37, XP002626483, ISSN: 0932-8092, DOI: 10.1007/PL00013268
- XU SHU-SHU ET AL: "3D reconstruction from bifocus imaging", AUDIO LANGUAGE AND IMAGE PROCESSING (ICALIP), 2010 INTERNATIONAL CONFERENCE ON, IEEE, PISCATAWAY, NJ, USA, 23. November 2010 (2010-11-23), Seiten 1479-1483, XP031847005, ISBN: 978-1-4244-5856-1
- Daniel H Baker: "Face distortion is not due to lens distortion", Daniel's Visionarium - A blog about visual perception, 5. Mai 2012 (2012-05-05), Seiten 1-5, XP055301417, York, UK Gefunden im Internet: URL:https://bakerdh.wordpress.com/2012/05/ 05/face-distortion-is-not-due-to-lens-dist ortion/ [gefunden am 2016-09-09]
- B Hönlinger ET AL: "Verzeichnung", , Oktober 2009 (2009-10), Seiten 1-28, XP55300859, Gefunden im Internet: URL:http://www.zeiss.com/content/dam/Photo graphy/new/pdf/de/cln_archiv/cln33_de_web_ special_distortion.pdf [gefunden am 2016-09-08]

## Beschreibung

Die vorliegende Erfindung betrifft das Gebiet der Personenidentifikation.

Zur Personenidentifikation beispielsweise bei automatischen Grenzkontrollsystemen, wie EasyPASS, wird in der Regel ein Bild einer zu identifizierenden Person aufgenommen, und das aufgenommene Bild wird mit einem Referenzbild der Person verglichen, um die Person zu identifizieren.

Das Referenzbild der Person wird üblicherweise unter Einhaltung eines definierten Aufnahmeszenarios, insbesondere einer Entfernung zwischen der Person und einer Referenzbildkamera bei einer vorgegebenen Brennweite eines Kameraobjektivs erstellt. Bei der Aufnahme des Bildes der Person, beispielsweise im Rahmen einer Grenzkontrolle, kann ein derartiges Aufnahmeszenario jedoch nicht immer reproduziert bzw. eingehalten werden. Vielmehr werden die Bilder in unterschiedlichen Entfernungen zwischen der Person und der Bildkamera aufgenommen. Ist die Entfernung zwischen der Person und der Bildkamera beispielsweise zu gering für die jeweils verwendete optische Brennweite, so kann es zu optischen Abbildungsfehlern, insbesondere zu Verzeichnungen, kommen, welche die Identifizierung der Person durch einen Vergleich eines derartig aufgenommenen Bildes mit einem Referenzbild erschweren. Diese Problematik tritt insbesondere bei der Verwendung einer mobilen, weitwinkligen Bildkamera, beispielsweise einer Bildkamera eines Smartphones, zur Aufnahme eines Bildes der zu identifizierenden Person auf.

Die Druckschrift JP 2007 226549 A offenbart ein ID-Kartensystem und ein ID-Kartenerstellungsverfahren. Das ID-Kartensystem umfasst zwei an unterschiedlichen Positionen angeordnete Kameras, um Bilder einer Person aufzunehmen. Die beiden Kameras weisen eine unterschiedliche Vergrößerung auf. Die von den beiden Kameras aufgenommenen Bilder werden mit Hilfe einer Lese- und Schreibvorrichtung in einem eingebauten Speicher der ID-Karte gespeichert.

Es ist die Aufgabe der vorliegenden Erfindung, ein Konzept für die Erzeugung von Referenzbildern zu schaffen, das optische Abbildungsfehler in zur Identifizierung von Personen aufgenommenen Bildern berücksichtigt.

Diese Aufgabe wird durch die Merkmale der unabhängigen Ansprüche gelöst. Vorteilhafte Weiterbildungsformen sind Gegenstand der abhängigen Ansprüche, der Beschreibung sowie der beiliegenden Figuren.

Die vorliegende Erfindung basiert auf der Erkenntnis, dass die obige Aufgabe durch die Aufnahme einer Mehrzahl von Referenzbildern derselben Person in unterschiedlichen Entfernungen zu der Person sowie mit unterschiedlichen Brennweiten gelöst werden kann.

So wird beispielsweise bei der Verwendung einer Weitwinkelbrennweite ein optischer Abbildungsfehler, insbesondere eine Verzeichnung, erhalten, welche typischerweise bei einer Bildaufnahme mittels einer Smartphone-Kamera aus einer geringen Entfernung, beispielsweise 30 bis 40 cm, zu erwarten ist. Eine derartige Verzeichnung manifestiert sich beispielsweise dadurch, dass der Bildkamera näher gelegene Gesichtsmerkmale, wie beispielsweise die Nase der Person, stärker vergrößert bzw. verzeichnet werden als der Bildkamera ferner liegende Gesichtsmerkmale, wie beispielsweise Augen. Ein erstes Referenzbild kann daher unter Verwendung einer Weitwinkel-Brennweite sowie in einer für die jeweilige Anwendung, wie eine Selbst-Aufnahme (sog. Selfie), typischen Entfernung, welche einer Armlänge entsprechen kann, aufgenommen werden.

Ein weiteres Referenzbild der Person kann beispielsweise mit einem Teleobjektiv aufgenommen werden, dessen Brennweite beispielsweise 110 mm beträgt und das sich in einer größeren Entfernung zu der Person, beispielsweise 1.5 m, befindet. Dadurch wird ein Aufnahmeszenario beispielsweise bei einem elektronischen Grenzkontrollsystem mit einer fest installierten Bildkamera berücksichtigt.

Die Referenzdaten mit den Referenzbildern und ggf. einer Angabe über die jeweilige Brennweite und ggf. Entfernung, können beispielsweise in einer Referenzdatenbank oder in einem Chip eines der jeweiligen Person zugeordneten Identifikationsdokumentes gespeichert werden. Dadurch wird ermöglicht, dass dasjenige Referenzbild, das das jeweilige Aufnahmeszenario berücksichtigt, beispielsweise eine Smartphone-Bildaufnahme, für einen Bildvergleich zur Identifizierung der Person herangezogen wird.

Die Mehrzahl der Referenzbilder der Person kann ferner zur Erzeugung eines digitalen Referenzkopfmodells einer Person herangezogen werden. Hierbei wird ausgenutzt, dass optische Abbildungsfehler, wie etwa tonnenförmige Verzeichnungen, entfernungsabhängig sind und somit aufgrund der entfernungsabhängigen Vergrößerung oder Verkleinerung von Gesichtsmerkmalen, wie etwa einer Nase, eine Tiefeninformation liefern, welche die Erstellung eines digitalen und dreidimensionalen Referenzmodells in besonders effizienter Weise ermöglicht.

Ein erster Aspekt, der nicht beansprucht wird, betrifft eine Bilderfassungsvorrichtung zur Aufnahme einer Mehrzahl von Referenzbildern zur Identifizierung einer Person mit einem Gehäuse und einer Bildkameraanordnung, welche in dem Gehäuse angeordnet und ausgebildet ist, ein erstes Bild der Person mit einer ersten optischen Brennweite in einer ersten optischen Entfernung zu der Person aufzunehmen, um ein erstes Referenzbild zu erhalten, und ein zweites Bild der Person mit einer zweiten optischen Brennweite in einer zweiten optischen Entfernung zu der Person aufzunehmen, um ein zweites Referenzbild der Person zu erhalten, und einer Kommunikationsschnittstelle zur Ausgabe des ersten Referenzbildes und des zweiten Referenzbildes der Person.

Das erste Bild und das zweite Bild können Frontalbilder der Person sein. Das erste Bild oder das zweite Bild kann jedoch auch ein Halbprofilbild sein während das jeweils andere Bild ein Frontalbild ist.

Durch die Aufnahmen der Person in unterschiedlichen Entfernungen sowie unter Verwendung von unterschiedlichen Brennweiten können für die Erzeugung von Referenzbildern unterschiedliche Bildaufnahmeszenarien berücksichtigt werden, wie sie bei einer Personenidentifikation auftreten können. Die erste optische Brennweite kann beispielsweise eine Weitwinkelbrennweite mit beispielsweise 15, 20, 25, 30 oder 35 mm sein. Die erste optische Entfernung zu der Person kann beispielsweise 20, 30, 40 oder 50 cm betragen, was in etwa einer Armlänge oder einem Selfie-Aufnahmeszenario entspricht. Dadurch wird ein Referenzbild erzeugt, das eine optische Verzeichnung aufweist, welche typischerweise bei einer weitwinkligen Bildaufnahme unter Verwendung eines Smartphones zu erwarten ist. Ein derartiges Referenzbild kann somit zur Personenidentifikation herangezogen werden, bei welcher ein mittels eines Smartphones aufgenommenes Personenbild mit einem Referenzbild verglichen werden soll.

Die zweite optische Brennweite kann beispielsweise eine Tele-Brennweite sein und beispielsweise 85, 90, 100 oder 110 mm betragen. Die zweite Entfernung ist bevorzugt größer als die erste Entfernung, so dass in dem zweiten Referenzbild geringere Verzeichnungen zu erwarten sind. Dadurch wird ein typisches Bildaufnahmeszenario mit einer fest installierten Bildkamera in beispielsweise einem automatischen Personenkontrollsystem berücksichtigt. In derartigen Fällen kann das zweite Referenzbild für die Personenidentifikation herangezogen werden.

Gemäß einer Ausführungsform umfasst das Gehäuse eine Apertur für die Lichtaufnahme. Somit kann in den Ausführungsbeispielen die erste optische Entfernung durch einen ersten optischen Abstand der Bildkameraanordnung oder einer Bildkamera zu der Apertur ersetzt werden. Analog kann die zweite optische Entfernung durch einen zweiten optischen Abstand der Bildkameraanordnung oder einer Bildkamera zu der Apertur ersetzt werden. Bevorzugt ist der erste optische Abstand geringer als der zweite optische Abstand.

Mit dem Begriff "optische Entfernung" bzw. "optischer Abstand" ist gemäß einer Ausführungsform die optische Strahlenlänge bzw. der optische Strahlenweg gemeint. Diese kann künstlich beispielsweise durch Verwendung von Umlenkprismen oder eines Teilerspiegels verlängert werden.

Das erste Referenzbild entspricht gemäß einer Ausführungsform dem digital vorliegenden ersten Bild, und das zweite Referenzbild entspricht dem zweiten Bild, das ebenfalls digital vorliegt. Gemäß einer Ausführungsform können die Bilder jedoch digital bearbeitet, beispielsweise gefiltert, skaliert, überabgetastet oder unterabgetastet werden. Das erste Referenzbild und das zweite Referenzbild können somit entsprechend auch einem verarbeiteten ersten Bild und einem verarbeiteten zweiten Bild entsprechen.

Die Kommunikationsschnittstelle kann eine drahtlose Kommunikationsschnittstelle, beispielsweise eine NFC, Bluetooth, WLAN oder Infrarot-Kommunikationsschnittstelle oder eine drahtgebundene Kommunikationsschnittstelle, beispielsweise eine USB- oder eine Ethernet-Kommunikationsschnittstelle sein.

Gemäß einer Ausführungsform sind das erste Bild und das zweite Bild Vollfrontalbilder der Person.

Gemäß einer Ausführungsform ist die erste optische Entfernung geringer als die zweite optische Entfernung und die erste optische Brennweite ist geringer als die zweite optische Brennweite. Dadurch wird in vorteilhafter Weise erreicht, dass das erste Referenzbild einen größeren Abbildungsfehler, beispielsweise stärkere Verzeichnungen, als das zweite Referenzbild aufweist. Somit kann das erste Referenzbild zur Personenidentifikation auf der Basis von Bildern herangezogen werden, welche beispielsweise aus geringer Entfernung mit Weitwinkelobjektiven gemacht wurden, wie es beispielsweise bei Smartphone-Kameras der Fall ist. Das zweite Referenzbild berücksichtigt den Aufnahmefall, in dem ein Bild einer Person mittels eines Teleobjektives, beispielsweise mit einer Brennweite von 85, 90, 105 oder 110 mm, aufgenommen wurde. Außerdem wurde erkannt, dass der Abbildungsfehler in besonders vorteilhafterweise eine dreidimensionale Tiefeninformation bereitstellt, welche zur Erzeugung eines Kopfmodels der Person auf der Basis der Aufnahmen herangezogen werden kann.

Gemäß einer Ausführungsform ist die erste Brennweite geringer als eine Normalbrennweite, und die zweite Brennweite größer als die Normallbrennweite, wobei die Normalbrennweite eine Brennweite eines Referenzbildformats, insbesondere eines Kleinbildformats, oder eine Referenzbildformat-äquivalente, insbesondere Kleinbildformat-äquivalente Brennweite ist.

Das Referenzformat kann beispielsweise ein Kleinbildformat mit 24 mm x 36 mm und einer Diagonalen von etwa 50mm oder ein Mittelformat mit 60 mm x 60 mm und einer Diagonalen von etwa 84 mm sein.

Gemäß einer Ausführungsform ist die Bildkameraanordnung ausgebildet, eine Mehrzahl von Referenzbildern in unterschiedlichen Entfernungen zu der Person sowie mit unterschiedlichen Brennweiten aufzunehmen. Eine der Brennweiten kann auch der vorstehend definierten Normalbrennweite entsprechen.

Die Normalbrennweite entspricht gemäß einer Ausführungsform einer Diagonalen des jeweils verwendeten oder berücksichtigten Bildaufnahmeformats bzw. des Referenzbildformats.

Gemäß einer Ausführungsform ist die Bildkameraanordnung ausgebildet, das erste Bild und das zweite Bild zumindest abschnittsweise entlang derselben optischen Achse oder entlang unterschiedlicher optischer Achsen, insbesondere entlang derselben Horizontalebene oder nebeneinander liegenden optischen Achsen, aufzunehmen.

Werden das erste Bild und das zweite Bild zumindest abschnittsweise entlang derselben optischen Achse aufgenommen, so werden die Bilder aus exakt derselben Perspektive aufgenommen, wodurch Frontalbilder der Person entstehen. Derartige Bilder können entweder unter Verwendung einer verfahrbaren Kamera mit variablen Brennweiten oder mit zwei Kameras und einer Prismen- oder Spiegelanordnung, welche Bildaufnahmen entlang der derselben optischen Achse ermöglicht, aufgenommen werden.

Im Falle der Aufnahmen entlang unterschiedlicher Achsen, welche beispielsweise in derselben horizontalen oder vertikalen Ebene liegen, können zwei Bildkameras verwendet werden, welche optisch nebeneinander oder untereinander angeordnet sind. Die optischen Achsen können entweder nebeneinander, übereinander, und parallel oder spitzwinklig zueinander verlaufen. Der hierbei resultierende Abbildungsunterschied kann beispielsweise rechnerisch berücksichtigt bzw. ausgeglichen werden. Die optischen Entfernungen, welche mit den Anordnungen der Kameras zusammenhängen, können unterschiedlich sein.

Gemäß einer Ausführungsform ist die Bildkameraanordnung ausgebildet, das erste Bild und das zweite Bild gleichzeitig oder unmittelbar nacheinander aufzunehmen. Durch die gleichzeitige Aufnahme des ersten Bildes und des zweiten Bildes wird in vorteilhafter Weise erreicht, dass die Aufnahmen bezüglich der Position der aufzunehmenden Person identisch sind. Die Bilder können jedoch unmittelbar nacheinander aufgenommen werden, was beispielsweise bei einer verfahrbaren Kamera vorteilhaft ist. Ein Zeitintervall zwischen den beiden Bildaufnahmen kann beispielsweise in einem Millisekundenbereich liegen.

Gemäß einer Ausführungsform ist die Bildkameraanordnung ausgebildet, die Person in dem ersten Bild und in dem zweiten Bild gleich groß aufzunehmen. Hierbei werden die erste Entfernung und die zweite Entfernung so gewählt, dass unter Berücksichtigung der unterschiedlichen Brennweiten beispielsweise der Personenkopf in den beiden Bildern gleich groß erscheint. Auf diese Weise können die Bilder unmittelbar übereinandergelegt werden, um beispielsweise, wie es nachfolgend ausgeführt ist, ein dreidimensionales Referenzkopfmodell der Person zu erzeugen.

Gemäß einer Ausführungsform kann die Person, insbesondere ein Kopf der Person, in dem ersten Bild und in dem zweiten Bild unterschiedlich groß aufgenommen werden. In diesem Fall kann eines der Bilder digital vergrößert werden, um gleich große Aufnahmen der Person zu erhalten.

Um festzustellen, ob die Aufnahmen gleich groß sind, können beispielsweise die resultierenden Augenabstände der Person verglichen und als Referenz für eine Größenskalierung des jeweiligen Bildes herangezogen werden.

Gemäß einer Ausführungsform weist die Bildkameraanordnung eine erste Referenzbildkamera mit der ersten Brennweite für die Aufnahme des ersten Bildes und eine zweite Referenzbildkamera mit der zweiten Brennweite für die Aufnahme des zweiten Bildes auf.

Die Referenzbildkameras können digitale Bildkameras sein, welche mit Objektiven ausgestattet sind, deren Brennweiten fest oder variabel sind. Bevorzugt werden bei der Verwendung von zwei Referenzbildkameras feste Brennweiten eingesetzt, um ein definiertes Aufnahmeszenario zu erhalten. Die erste Brennweite kann beispielsweise 35 mm und die zweite Brennweite kann beispielsweise 110 mm betragen. Es ist jedoch denkbar, dass sowohl die erste Brennweite als auch die zweite Brennweite sich von den vorgenannten Werten unterscheiden.

Gemäß einer Ausführungsform sind die erste Referenzbildkamera und die zweite Referenzbildkamera nebeneinander in der gleichen Ebene angeordnet. Auf diese Weise wird vorteilhaft erreicht, dass die Aufnahmen der frontalen Bilder entlang unterschiedlicher optischer Achsen, die sich schneiden oder nicht schneiden, durchgeführt werden können. Die erste Referenzbildkamera und die zweite Referenzbildkamera sind bevorzugt dicht nebeneinander, beispielsweise Seite an Seite, angeordnet.

Gemäß einer Ausführungsform ist in dem Gehäuse ein optischer Teilerspiegel angeordnet, wobei die erste Referenzbildkamera und die zweite Referenzbildkamera in unterschiedlichen Höhen beidseits des optischen Teilerspiegels angeordnet sind, wobei der optische Teilerspiegel ausgebildet ist, einen ersten Lichtanteil zu der ersten Referenzbildkamera durchzulassen und einen zweiten Lichtanteil zu der zweiten Referenzbildkamera umzulenken, oder wobei der optische Teilerspiegel ausgebildet, einen ersten Lichtanteil zu der ersten Referenzbildkamera umzulenken und einen zweiten Lichtanteil zu der zweiten Referenzbildkamera durchzulassen. Durch die Verwendung des optischen Teilerspiegels wird eine Lichtumlenkung erreicht, so dass die erste Bildkamera und die zweite Bildkamera beispielsweise winklig zueinander, beispielsweise rechtwinklig zueinander, angeordnet sein können und dennoch die Bilder zumindest teilweise entlang derselben optischen Achse aufnehmen können. Damit wird sichergestellt, dass das erste Bild und das zweite Bild exakt aus derselben Perspektive trotz der Verwendung von zwei Referenzbildkameras aufgenommen werden. Dadurch können effizient Vollfrontalbilder aufgenommen werden.

Gemäß einer Ausführungsform weist die Bildkameraanordnung eine verfahrbare Referenzbildkamera auf, insbesondere eine auf einem Schlitten verfahrbare Referenzbildkamera, welche für die Aufnahme des ersten Bildes mit der ersten Brennweite in der ersten Entfernung in eine erste Aufnahmeposition und für die Aufnahme des zweiten Bildes mit der zweiten Brennweite in der zweiten Entfernung in eine zweite Position entlang einer optischen Achse verfahrbar ist. Dadurch wird in vorteilhafter Weise erreicht, dass das erste Bild und das zweite Bild mittels einer einzigen Kamera aufgenommen werden. Die Referenzbildkamera kann auf einem Schlitten angeordnet sein, welcher entlang der optischen Achse verfahrbar ist. Auf diese Weise kann die Referenzbildkamera für die Aufnahme des ersten Bildes in Richtung der aufzunehmenden Person, d.h. näher an eine Apertur des Gehäuses, gebracht werden. Dadurch wird ein weitwinkliges Bild aus einer geringeren Entfernung aufgenommen, welches Verzeichnungen aufweist, die beispielsweise bei einer Bildaufnahme mittels einer Smartphone-Kamera entstehen können. Für die Aufnahme des zweiten Bildes wird die Referenzkamera entlang der optischen Achse von der Person wegbewegt, wodurch eine Entfernung zwischen der Apertur des Gehäuses und der Referenzkamera vergrößert wird. Auf diese Weise kann beispielsweise eine Tele-Aufnahme mit einer Brennweite von 110 mm aus einer entsprechenden Entfernung bewirkt werden. Die Referenzkamera kann beispielsweise ein Objektiv aufweisen, dessen Brennweite variabel ist und auf den gewünschten Wert, beispielsweise 35 mm oder 110 mm, elektronisch eingestellt werden kann. Zum Verfahren der Referenzbildkamera auf dem Schlitten kann beispielsweise ein elektrischer Antrieb vorgesehen sein.

Gemäß einer Ausführungsform liegt das erste Bild digital vor und bildet das erste Referenzbild und das zweite Bild liegt digital vor und bildet das zweite Referenzbild.

Gemäß einer Ausführungsform ist die Kommunikationsschnittstelle ausgebildet, das erste Referenzbild zusammen mit einer Information über die erste Brennweite und das zweite Referenzbild zusammen mit einer Information über die zweite Brennweite auszugeben. Dadurch werden Referenzdatensätze ausgegeben. Die jeweilige Information über die jeweilige Brennweite kann in der Gestalt von Metadaten ausgegeben sein. Dadurch wird in vorteilhafter Weise sichergestellt, dass im Falle der Personenidentifikation dasjenige Referenzbild ausgewählt werden kann, dessen Brennweite der jeweils für die Bildaufnahme zum Zwecke der Personenidentifikation verwendeten Brennweite eher entspricht. Diese Informationen bzw. Daten können beispielsweise in einem Header der jeweiligen Bilddatei, beispielsweise in einem TIFF-Header, enthalten sein.

Zusätzlich zu oder anstatt der Information über die jeweilige Brennweite kann die Kommunikationsschnittstelle gemäß einer Ausführungsform ausgebildet sein, Information über die jeweilige erste oder zweite optische Entfernung oder den jeweiligen optischen Abstand und/oder über die Focus-Abstände auszugeben.

Gemäß einer Ausführungsform ist der Prozessor ausgebildet, ein dreidimensionales Referenzmodell, insbesondere Referenzkopfmodell, der Person anhand des ersten Bildes und des zweiten Bildes zu erzeugen. Diesem Konzept liegt die Erkenntnis zugrunde, dass ein dreidimensionales Kopfmodell auf der Basis von zwei Bildern, beispielsweise zwei Vollfrontalbildern, erzeugt werden kann, falls zumindest eines der Frontalbilder einen optischen Abbildungsfehler, beispielsweise eine Verzeichnung, aufweist. Dadurch wird in vorteilhafter Weise erreicht, dass für die Erzeugung des dreidimensionalen Referenzmodells keine gesonderten Bildaufnahmen notwendig sind, sodass die für einen zweidimensionalen Vergleich vorgesehenen Referenzbilder zusätzlich zur Erzeugung des Referenzmodells herangezogen werden können.

Gemäß einer Ausführungsform weist das erste Bild einen entfernungsabhängigen optischen Abbildungsfehler, insbesondere eine Verzeichnung oder eine Verzerrung, auf, und der Prozessor ist ausgebildet, den entfernungsabhängigen optischen Abbildungsfehler durch einen Vergleich des ersten Bildes mit dem zweiten Bild zu erfassen und das dreidimensionale Personenmodell unter Ausnutzung des optischen Abbildungsfehlers zu erzeugen. Der entfernungsabhängige optische Abbildungsfehler manifestiert sich beispielsweise dadurch, dass näher an der Bildkameraanordnung angeordnete Merkmale der Person, wie beispielsweise eine Nase der Person, vergrößert werden. Weiter hinter liegende Merkmale werden hingegen weniger vergrößert oder sogar verkleinert. Bei einem Vergleich mit dem zweiten Referenzbild, das keinen oder einen geringeren Abbildungsfehler aufweist, können derartige Verzerrungen bzw. Verzeichnungen erfasst und im Sinne einer Tiefeninformation verwendet werden, um das dreidimensionale Referenzmodell zu erzeugen. Mit anderen Worten ausgedrückt, der ansonsten nachteilige optische Abbildungsfehler bei Verwendung von weitwinkligen Brennweiten wird in vorteilhafter Weise zur Modellierung des dreidimensionalen Referenzmodells herangezogen.

Gemäß einer Ausführungsform ist der entfernungsabhängige Abbildungsfehler eine entfernungsabhängige, beispielsweise tonnenförmige Verzeichnung, und der Prozessor ist ausgebildet, eine dreidimensionale Tiefeninformation für die Erzeugung des dreidimensionalen Referenzmodells aus der entfernungsabhängigen Verzeichnung abzuleiten.

Gemäß einer Ausführungsform ist die Kommunikationsschnittstelle ausgebildet, das erzeugte dreidimensionale Referenzmodell auszugeben.

Gemäß einer Ausführungsform kann die Bilderfassungsvorrichtung zur Personenidentifikation eingesetzt werden. Hierbei ist die Bildkameraanordnung vorgesehen, ein erstes Bild und ein zweites Bild der Person aufzunehmen. Die Bilder ersetzen somit die Referenzbilder in den genannten Ausführungsbeispielen. Die Bilderfassungsvorrichtung kann dann in einer Identifikationsvorrichtung zur Personenidentifikation oder, auf der Basis der Tiefeninformation, zur Lebenderkennung bzw. zur Erkennung eines Präsentationsangriffs, bei dem beispielsweise statt einer lebenden Person ein Personenbild oder eine Personenattrappe mit Merkmalen einer bestimmten Person verwendet werden, eingesetzt werden.

Gemäß einem zweiten Aspekt betrifft die Erfindung ein Identifikationsdokument gemäß, Anspruch 1.

Das erste Referenzbild und das zweite Referenzbild können beispielsweise mittels der Bilderfassungsvorrichtung gemäß dem erstgenannten Aspekt aufgenommen sein. Auf diese Weise werden für die Personenidentifikation unterschiedliche Referenzbilder bereitgestellt, welche unterschiedliche Bildaufnahmeszenarien, beispielsweise eine Bildaufnahme mittels eines Weitwinkelobjektivs eines Smartphones, berücksichtigen. So kann in Abhängigkeit von dem jeweiligen Bildaufnahmeszenario dasjenige Referenzbild ausgewählt werden, dessen Brennweite der jeweils verwendeten Brennweite am ehesten entspricht.

Die Kommunikationsschnittstelle ist ausgebildet, eine Aufforderung zur Ausgabe eines Referenzbildes, dem eine bestimmte Brennweite zugeordnet ist, zu empfangen, wobei die Kommunikationsschnittstelle ausgebildet ist, das erste Referenzbild auszugeben, falls die erste Brennweite der bestimmten Brennweite entspricht, oder das zweite Referenzbild auszugeben, falls die zweite Brennweite der bestimmten Brennweite entspricht. Die Information über die bestimmte Brennweite kann beispielsweise in der Gestalt eines Metadatums digital übertragen werden.

Gemäß einem dritten Aspekt betrifft die Erfindung eine Identifikationsvorrichtung gemäß Anspruch 2.

Die Kommunikationsschnittstelle kann beispielsweise eine NFC-Kommunikationsschnittstelle sein, welche mit einer NFC-Kommunikationsschnittstelle des Identifikationsdokumentes bzw. des elektronischen Schaltkreises des Identifikationsdokumentes kommuniziert. Dadurch wird in vorteilhafter Weise dasjenige Referenzbild für die Personenidentifikation bereitgestellt, dem eine Brennweite zugeordnet ist, welche der bestimmten Brennweite am ehesten entspricht. Somit kann der Vergleich zwischen dem aufgenommenen Bild der Person und dem ausgelesenen Referenzbild effizienter durchgeführt werden.

Gemäß einer Ausführungsform ist der Prozessor ausgebildet, das aufgenommene Bild der Person, insbesondere durch Morphing, zu verarbeiten, falls die bestimmte Brennweite sich von der Brennweite des ausgelesenen Referenzbildes unterscheidet, um die Wirkung eines Brennweitenunterschiedes in dem aufgenommenen Bild zu verringern. Durch die Verarbeitung des Bildes der Person kann beispielsweise ein Abbildungsfehler in das Bild eingeführt werden, welcher für ein Aufnahmeszenario und mit der bestimmten Brennweite, beispielsweise für die Bildaufnahme mittels eines weitwinkligen Objektivs eines Smartphones, charakteristisch ist. Somit wird das aufgenommene Bild der Person dem ausgelesenen Referenzbild angeglichen, dessen Brennweite mehr an der bestimmten Brennweite liegt als eine Brennweite eines weiteren Referenzbildes.

Gemäß einer Ausführungsform kann jedoch das ausgelesene Referenzbild wie vorstehend ausgeführt bearbeitet werden, um eine Angleichung an das aufgenommene Bild zu erhalten.

Gemäß einer Ausführungsform ist die Bildkameraanordnung ausgebildet, das Bild der Person aus einer ersten Entfernung zwischen der Bildkameraanordnung und der Person aufzunehmen, wobei die Bildkameraanordnung ferner ausgebildet ist, ein weiteres Bild der Person aus einer zweiten Entfernung zwischen der Bildkameraanordnung und der Person mit einer weiteren bestimmten Brennweite aufzunehmen, wobei die bestimmte Brennweite und die weitere bestimmte Brennweite unterschiedlich sind, wobei das Bild der Person und das weitere Bild der Person sich um einen optischen Abbildungsfehler unterscheiden, und wobei der Prozessor ausgebildet ist, eine Tiefeninformation aus dem optischen Abbildungsfehler abzuleiten. Die Ableitung der Tiefeninformation kann wie vorliegend, insbesondere in Bezug auf die hierin genannten Aspekte, beschrieben durchgeführt werden.

Die bestimmte Brennweite kann der vorliegend, beispielsweise in Bezug auf die erste Ausführungsform, beschriebenen ersten Brennweite entsprechend und die weitere bestimmte Brennweite kann der vorliegend, beispielsweise in Bezug auf die erste Ausführungsform, beschriebenen zweiten Brennweite entsprechen. Die erste Entfernung und die zweite Entfernung können den im Zusammenhang mit dem ersten Aspekt beschriebenen ersten und zweiten Entfernungen entsprechen.

Gemäß einer Ausführungsform ist der Prozessor ausgebildet, anhand der Tiefeninformation eine Personenlebenderkennung oder eine Presentation-Attack-Erkennung durchzuführen. Bei einem derartigen Angriff wird beispielsweise statt einer lebenden Person ein Personenbild oder eine Personenattrappe mit Merkmalen einer bestimmten Person verwendet. Die Tiefeninformation kann beispielsweise dazu eingesetzt werden, um ein zweidimensionales Bild zu erkennen. Dabei können auch vollfrontalaufnahmen verwendet werden.

Gemäß einer Ausführungsform ist der Prozessor ausgebildet, anhand des Bildes, des weiteren Bildes sowie der Tiefeninformation ein dreidimensionales Personenmodell, insbesondere Kopfmodell, der Person zu erzeugen, und das dreidimensionale Personenmodell mit einem der Person zugeordneten Referenzmodell zu vergleichen. Die Erzeugung des Personenmodels kann wie vorliegend in Bezug auf das Referenzmodell der Person durchgeführt werden.

Gemäß einer Ausführungsform ist die Identifikationsvorrichtung ein mobiles Kommunikationsgerät, insbesondere ein Smartphone. In diesem Fall kann die Bildkameraanordnung nur eine Bildkamera aufweisen, deren bestimmte Brennweite eine Weitwinkel-Brennweitem ist und beispielsweise der beschriebenen ersten Brennweite entspricht.

Gemäß einer Ausführungsform ist die Identifikationsvorrichtung eine stationäre Identifikationsvorrichtung. In diesem Fall kann die Bildkameraanordnung strukturell und funktional der Bildkameraanordnung mit den Merkmalen gemäß dem ersten Aspekt und den Ausführungsformen des ersten Aspekts entsprechen. In diesem Falle werden die Bilder für Identifikationszwecke und nicht als Referenzbilder aufgenommen.

Gemäß einem vierten Aspekt betrifft die Erfindung ein Verfahren zum Personifizieren eines Identifikationsdokumentes einer Person gemäß Anspruch 7.

Weitere Verfahrensschritte ergeben sich unmittelbar aus der Funktionalität der erfindungsgemäßen Bilderfassungsvorrichtung.

Gemäß einer Ausführungsform wird das Verfahren durch die erfindungsgemäße Bilderfassungsvorrichtung durchgeführt. Dabei werden die Bilder mittels der Bildkameraanordnung aufgenommen. Zum Speichern der Referenzbilder auf dem Identifikationsdokument kann die Kommunikationsschnittstelle der Bilderfassungsvorrichtung eine Kommunikationsverbindung zu einer Kommunikationsschnittstelle des Identifikationsdokumentes, beispielsweise einer NFC-Kommunikationsschnittstelle, aufbauen und auf den Speicher zugreifen. Dadurch wird der das Identifikationsdokument im Rahmen eines Enrollment-Prozesses personifiziert.

Ein fünfter Aspekt, der nicht beansprucht ist, betrifft ein Verfahren zum Erstellen eines dreidimensionalen Referenzmodels einer Person mit Aufnehmen eines ersten Bildes der Person mit einer ersten optischen Brennweite in einer ersten optischen Entfernung zu der Person; Aufnehmen eines zweiten Bildes der Person mit einer zweiten optischen Brennweite in einer zweiten optischen Entfernung zu der Person; und Erzeugen eines dreidimensionalen Referenzmodels, insbesondere Referenzkopfmodels, der Person anhand des ersten Bildes und des zweiten Bildes.

Das Verfahren kann mittels der erfindungsgemäßen Bilderfassungsvorrichtung durchgeführt werden. Dabei werden die Bilder mittels der Bildkameraanordnung aufgenommen. Das dreidimensionale Referenzmodell kann beispielsweise mittels des Prozessors der Bilderfassungsvorrichtung erstellt werden. Gemäß einer Ausführungsform können die Referenzbilder jedoch über die Kommunikationsschnittstelle und ein Kommunikationsnetzwerk an einen entfernten Personalisierungsserver übermittelt werden, welcher das dreidimensionale Referenzmodell wie ausgeführt erzeugt.

Gemäß einem sechsten Aspekt betrifft die Erfindung ein Verfahren zur Identifikation einer Person anhand eines Identifikationsdokumentes gemäß Anspruch 8.

Das Bild der Person kann beispielsweise mit einer Smartphone-Bildkamera aufgenommen werden, welche in der Regel eine weitwinklige Bildkamera ist. In diesem Fall würde das erste Referenzbild aus dem Identifikationsdokument ausgelesen werden, das beispielsweise die geringere Brennweite als das zweite Referenzbild aufweist. Dadurch wird der Einfluss der Verzeichnungen in dem aufgenommenen Bild der Person berücksichtigt. Bei einer Aufnahme des Bildes der Person mittels eines Teleobjektives, was beispielsweise in automatischen Grenz- bzw. Zugangskontrollsystemen mit stationär installierten Kameras der Fall ist, würde das zweite Referenzbild ausgelesen werden, das eine größere Brennweite als das erste Referenzbild aufweist und somit die tatsächlichen Aufnahmebedingungen bei der Verwendung des Teleobjektives eher berücksichtigt.

Der Vergleich der Bilder kann beispielsweise pixelweise verfolgen. Gemäß einer Ausführungsform können für den Vergleich charakteristische Bildmerkmale, wie beispielsweise Augenabstand und dergleichen, verwendet werden.
Gemäß einer Ausführungsform wird das Bild der Person aus einer ersten Entfernung zu der Person aufgenommen, mit den weiteren Schritten des Aufnehmens eines weiteren Bildes der Person aus einer zweiten Entfernung zu der Person mit einer weiteren bestimmten Brennweite, wobei die bestimmte Brennweite und die weitere bestimmte Brennweite unterschiedlich sind, wobei das Bild der Person und das weitere Bild der Person sich um einen optischen Abbildungsfehler unterscheiden; des Ableitens einer Tiefeninformation aus dem optischen Abbildungsfehler; und des Durchführens einer Personenlebenderkennung oder einer Presentation Attack Detection anhand der abgeleiteten Tiefeninformation.

Weitere Ausführungsformen der Erfindung werden Bezug nehmend auf die beiliegenden Figuren erläutert. Es zeigen:
- Fig. 1: eine schematische Darstellung einer Bilderfassungsvorrichtung;
- Fig. 2: eine schematische Darstellung einer Bilderfassungsvorrichtung;
- Fig. 3: eine schematische Darstellung eines Identifikationsdokumentes; und
- Fig. 4: eine schematische Darstellung einer Identifikationsvorrichtung.

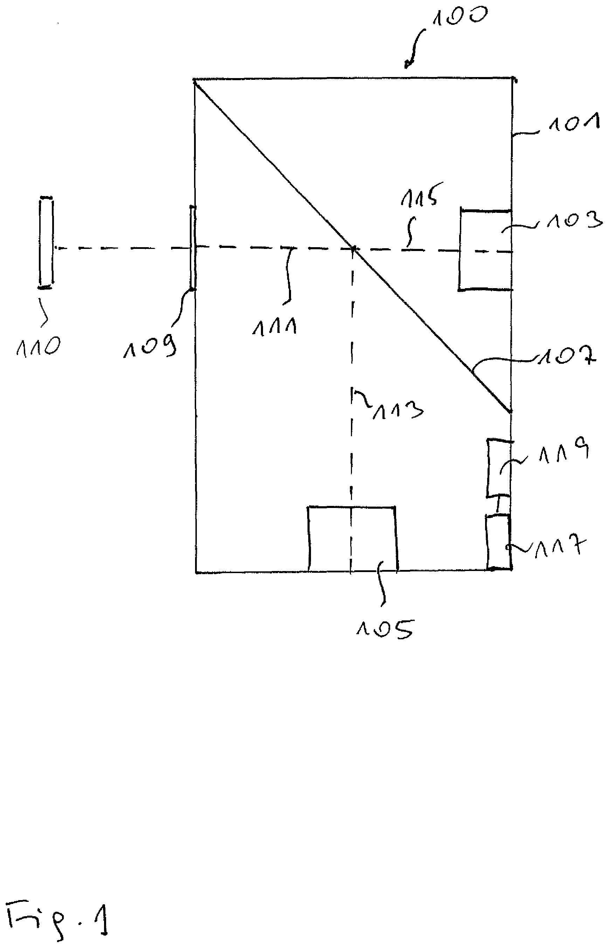

Fig. 1 zeigt eine Bilderfassungsvorrichtung 100 zur Aufnahme einer Mehrzahl von Referenzbildern, welche zur Identifizierung einer Person verwendet werden. Die Bilderfassungsvorrichtung umfasst ein Gehäuse 101, in welchem eine Bildkameraanordnung 103, 105 angeordnet ist. Die Bildkameraanordnung 103, 105 umfasst beispielsweise eine erste Bildkamera 103 sowie eine zweite Bildkamera 105. Die Bildkameras 103, 105 sind bevorzugt digitale Bildkameras, deren aufgenommene Bilder in der Gestalt von digitalen Bilddaten vorliegen. Die erste Bildkamera 103, insbesondere ein Objektiv der ersten Bildkamera 103, hat eine erste optische Brennweite, welche beispielsweise eine Weitwinkelbrennweite sein kann. Die erste Brennweite kann beispielsweise 35 mm betragen.

Die zweite Bildkamera 105 umfasst eine zweite Brennweite, insbesondere ein Objektiv der zweiten Bildkamera 105, bei welcher es sich nicht um eine Weitwinkelbrennweite handelt. Die zweite Brennweite kann beispielsweise eine Tele-Brennweite sein und 105 oder 110 mm betragen.

In dem Gehäuse 101 ist ferner ein Teilerspiegel 107 angeordnet, welcher ein Gehäuseinnenraum in einen oberen Unterraum und in einen unteren Unterraum teilt. Die erste Bildkamera 103 ist in dem oberen Unterraum angeordnet, während die zweite Bildkamera 105 in dem unteren Unterraum angeordnet ist.

Das Gehäuse 101 umfasst ferner eine optionale Öffnung 109, beispielsweise eine Apertur, durch welche Licht von außen eindringen kann.

Die erste Kamera 103 sowie die zweite Kamera 105 sind zusammen mit dem Teilerspiegel 107 derart angeordnet, dass das erste und das zweite Bild der in Fig. 1 schematisch dargestellten Person 110 zumindest abschnittsweise entlang derselben optischen Achse 111 aufgenommen werden können. Dadurch können beispielsweise Vollfrontalbilder erzeugt werden.

Die erste Bildkamera 103 ist in einer ersten optischen Entfernung zu der Person angeordnet, während die zweite Bildkamera 105 in einer zweiten optischen Entfernung zu der Person 110 angeordnet ist. Die erste optische Entfernung ist bevorzugt geringer als die zweite optische Entfernung. Mit anderen Worten ausgedrückt, die erste Bildkamera 103 ist in einem geringeren optischen Abstand zu der Öffnung 109 als die zweite Bildkamera 105 angeordnet. Mit dem Begriff "optische Entfernung" bzw. "optischer Abstand" ist ein vereinfachter Strahlenweg gemeint, welcher in Fig. 1 durch die gestrichelten Linien dargestellt ist.

Der Teilerspiegel 107 ist in dem Strahlenweg schräg angeordnet und vorgesehen, einen ersten Teil 115 des einfallenden Lichtes der ersten Kamera 103 zuzuleiten und einen zweiten Teil 113 des einfallenden Lichts zu der zweiten Bildkamera 105 umzulenken. Auf diese Weise können gleichzeitige Bildaufnahmen entlang derselben optischen Achse 111 mittels der ersten Bildkamera 103 und der zweiten Bildkamera 105 realisiert werden.

Gemäß einer Ausführungsform ist das erste Bild, das mittels der ersten Bildkamera 103 erzeugt wird, ein erstes Referenzbild, während das zweite Bild, das mittels der zweiten Bildkamera 105 erzeugt wird, ein zweites Referenzbild ist. Die Referenzbilder können mittels der Kommunikationsschnittstelle 117 der Bilderfassungsvorrichtung ausgegeben werden. Die Kommunikationsschnittstelle 117 ist beispielsweise eine WLAN-Kommunikationsschnittstelle oder eine Ethernet-Kommunikationsschnittstelle oder eine Internet-Kommunikationsschnittstelle oder eine Bluetooth-Kommunikationsschnittstelle oder eine MFC-Kommunikationsschnittstelle. An die Kommunikationsschnittstelle 117 kann beispielsweise eine Kommunikationsschnittstelle eines Identifikationsdokumentes angekoppelt werden, welches die erzeugten Referenzbilder aufnimmt und für Vergleichszwecke speichert. Dadurch kann das Identifikationsdokument personifiziert werden.

Die Bildaufnahmevorrichtung umfasst optional einen Prozessor 119, welcher die erste Bildkamera 103 und die zweite Bildkamera 105 ansteuert, um diese beispielsweise gleichzeitig auszulösen. Der Prozessor 119 kann ferner einen Kommunikationsaustausch mit einem in Fig. 1 nicht dargestellten Identifikationsdokument oder mit einer über ein Kommunikationsnetzwerk erreichbaren Datenbank über die Kommunikationsschnittstelle 117 steuern.

Gemäß einer Ausführungsform ist der Prozessor 119 ausgebildet, anhand des ersten Referenzbildes und des zweiten Referenzbildes ein digitales Referenzmodell, beispielsweise ein Kopfmodell, der Person 110 zu erzeugen. Wie es in Fig. 1 beispielhaft dargestellt ist, enthalten die Referenzbilder dieselbe perspektivische Darstellung der Person 110. Dies ist dadurch bedingt, dass die Aufnahmen zumindest teilweise entlang derselben optischen Achse 111 bewirkt wurden.

Die erste Bildkamera 103 ist bevorzugt in einer geringeren Entfernung zu der Person 110 angeordnet als die zweite Bildkamera 105. Darüber hinaus ist die erste Bildkamera 103 mit einer geringeren optischen Brennweite verbunden als die zweite Bildkamera 105. Aus diesem Grund ist in dem ersten Referenzbild, das mittels der ersten Bildkamera aufgenommen wurde, von einem größeren Abbildungsfehler auszugehen, als in dem zweiten Referenzbild. Bei einer Übereinanderlegung der Referenzbilder kann der optische Abbildungsfehler in der Gestalt eines Bildunterschiedes umfasst werden. Dieser Bildunterschied liefert eine Tiefeninformation, welche zur Modellierung des dreidimensionalen Referenzmodells herangezogen werden kann. So ist beispielsweise ein Nasenbereich der Person, der näher an der Apertur 109 angeordnet ist als beispielsweise ein Stirnbereich, in dem ersten Referenzbild größer dargestellt als in dem zweiten Referenzbild. Aus der Vergrößerung kann auf einen Höhenunterschied zu beispielsweise einem Stirnbereich geschlossen werden. Dadurch kann der Abbildungsfehler-bedingte Unterschied zwischen den Referenzbildern erfasst werden und in eine Tiefeninformation überführt werden.

In dem in Fig. 1 dargestellten Ausführungsbeispiel sind die Bildkameras 103, 105 angeordnet, um jeweils ein Bild der Person 110 aus exakt derselben Perspektive, d.h. entlang derselben optischen Achse 111 aufzunehmen.

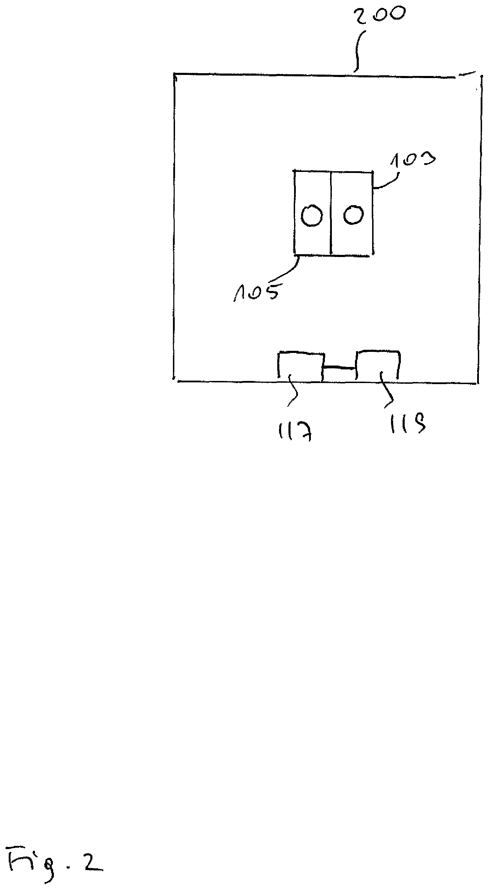

Gemäß einer weiteren, in Fig. 2 dargestellten Ausführungsform einer Bilderfassungsvorrichtung 200 können die Bildkameras 103, 105 Seite an Seite angeordnet werden, um Vollfrontalbilder aufzunehmen. Die hierbei auftretende Parallaxe aufgrund unterschiedlicher optischer Achsen kann beispielsweise gemessen und den Referenzdaten, d.h. den Referenzbildern, beigefügt werden. Diese Information kann beispielsweise dazu herangezogen werden, um die Referenzbilder rechnerisch zu verarbeiten, um darin den Einfluss der Parallaxe zu beseitigen. Gemäß einer Ausführungsform kann die Information, welche die Parallaxe betrifft, einer dreidimensionalen Verifikationsanwendung zugeleitet werden, damit diese den auftretenden Parallaxenfehler verrechnen kann. Die dreidimensionale Verifikationsanwendung kann beispielsweise das aus den Referenzbildern erzeugte digitale dreidimensionale Referenzmodell mit einem dreidimensionalen Kopfmodell einer Person vergleichen, um diese Person zu identifizieren, wobei die Parallaxe berücksichtigt werden kann.

Gemäß einer Ausführungsform sind die Brennweiten der Bildkameras 103, 105 fest. Gemäß einer weiteren Ausführungsform kann es sich bei den Brennweiten um variabel einstellbare Brennweiten handeln.

In den in den Fig. 1 und 2 dargestellten Ausführungsformen werden die Aufnahmen der Bilder mittels der ersten Bildkamera 105 und der zweiten Bildkamera 109 bevorzugt gleichzeitig ausgeführt. Die Steuerung des Aufnahmezeitpunkts kann beispielsweise der Prozessor 119 vornehmen.

Gemäß einer Ausführungsform können die erste Kamera 103 und die zweite Kamera 105 auch unmittelbar untereinander angeordnet sein.

In einer weiteren Ausführungsform kann zusätzlich oder anstelle der ersten Bildkamera 103 eine dritte Bildkamera vorgesehen sein, welche beispielsweise unter einem Winkel von 45° seitlich angeordnet ist und für die Erfassung eines Halbprofilbildes vorgesehen ist. Das Halbprofilbild kann als drittes Referenzbild ebenfalls ausgegeben werden. Das dritte Referenzbild kann ferner auch zur Berechnung des dreidimensionalen Referenzmodells herangezogen werden, wie es vorstehend ausgeführt wurde. Das dritte Referenzbild kann ferner für einen traditionellen Bildvergleich durch einen Grenzbeamten herangezogen werden. Die dritte Bildkamera kann beispielsweise eine dritte Brennweite von beispielsweise 35 mm oder eine Tele-Brennweite von beispielsweise 90, 105 oder 110 mm aufweisen. Die dritte Brennweite kann jedoch eine Normalbrennweite bezogen auf das Kleinbildformat von 50 mm sein.

Das Kleinbildformat hat die Dimension 24 mm x 36 mm und somit eine Diagonale von etwa 50mm, welche die Normalbrennweite bestimmt.

In einer weiteren Ausführungsform kann die Bilderfassungsvorrichtung eine einzige Bildkamera aufweisen, welche beispielsweise auf einem Schlitten angeordnet und entlang der optischen Achse 111 verfahrbar ist. Auf diese Weise kann die in den Fig. 1 und 2 nicht dargestellte Bildkamera für das erste Bild in der ersten Entfernung zu der Person 110 positioniert werden. Hierbei kann die Brennweite der Bildkamera beispielsweise auf die erste Brennweite eingestellt werden. Für die Aufnahme des zweiten Bildes kann die Bildkamera in die zweite Entfernung bezüglich der Person 110 verfahren werden, welche beispielsweise der optischen, ersten Entfernung, an der die in Fig. 1 dargestellte zweite Bildkamera 105 angeordnet ist, entspricht. In der zweiten Entfernung kann die Brennweite vergrößert und beispielsweise auf die zweite Brennweite eingestellt werden. Die Bildkamera kann beispielsweise mittels eines Schlittens verfahrbar sein, welcher eine vorbestimmte Stopp-Position aufweist. Die Verfahren-Steuerung kann der Prozessor 119 übernehmen.

Gemäß einer Ausführungsform kann die Bildaufnahmevorrichtung in ABC-Gates, wie beispielsweise EasyPASS-Systemen, oder in Enrollment-Terminals verbaut werden.

Die erste optische Entfernung kann gemäß einer Ausführungsform 30, 40 oder 50 cm betragen oder in etwa einer Armlänge entsprechen. Dies entspricht einer Aufnahmesituation bei Selbst-Aufnahmen (so genannte Selfie-Aufnahmen) unter Verwendung eines Smartphones oder einer Notebook-Kamera.

Die zweite optische Entfernung kann beispielsweise 1 m oder 1,5 m betragen oder der in der Norm ISO 19794-5 definierten Entfernung entsprechen. Die zweite Entfernung kann jedoch auch 1,2 m betragen oder in einem Bereich zwischen 2 und 2,5 m liegen.

Zur Verlängerung der jeweiligen optischen Entfernung können weitere Teilerspiegel oder Prismen verwendet werden.

Gemäß einer Ausführungsform können in der Bilderfassungsvorrichtung weitere Kameras mit weiteren Brennweiten eingesetzt werden.

Die Brennweiten können gemäß einer Ausführungsform anwendungsspezifisch bestimmt bzw. ausgewählt werden.

Gemäß einer Ausführungsform können die Brennweiten variabel einstellbar sein, so dass unterschiedliche Anwendungsszenarien emuliert werden können.

Gemäß einer Ausführungsform können zur Erzeugung des dreidimensionalen Referenzmodells weitere Parameter, wie beispielsweise Entfernungen, Brennweiten oder weitere Abbildungseigenschaften der Bildkamera 103, 105, herangezogen werden, um die dreidimensionale Information zu erzeugen.

Ein Vorteil der vorstehend beschriebenen Anordnungen der Bildkameras 103, 105 besteht darin, dass die Person 110 nicht durch mehrere sichtbare Kameras nicht abgelenkt und somit beispielsweise für eine frontale Pose in Richtung des Gehäuses 101, insbesondere in Richtung der Apertur 109, ungestört schauen kann. Hierzu kann die Apertur 109 beispielsweise mit einer Markierung versehen sein, welche eine Positionierung der Person und somit die Aufnahmen von Vollfrontalbildern vereinfacht.

Gemäß einer Ausführungsform können das erste und das zweite Referenzbild für einen zweidimensionalen Bildvergleich mit einem automatisch erfassten Bild der Person, beispielsweise an einem Kontrollzugang, verglichen werden. Hierbei kann dasjenige Referenzbild ausgewählt werden, dessen Brennweite am ehesten der für die Bildaufnahme der Person für Verifikations- oder Identifikationszwecke verwendeten Brennweite entspricht. So kann bei einer weitwinkligen Aufnahme das erste Referenzbild verwendet werden, das erwartungsgemäß eine optische Verzeichnung aufweist, welche bei einer Weitwinkelaufnahme aus einer geringen Entfernung, beispielsweise aus einer Entfernung von 20 oder 30 cm, zu erwarten ist.

Gemäß einer weiteren Ausführungsform kann das erzeugte dreidimensionale Referenzmodell verwendet werden, um eine dreidimensionale Personenverifikation oder Personenidentifizierung durchzuführen. Hierbei wird das dreidimensionale Referenzmodell als Referenz für den Vergleich mit einem erstellen Kopfmodell der Person verwendet.

Gemäß einer Ausführungsform können die Referenzbilder bzw. die Referenzdaten umfassend die Referenzbilder sowie die Angaben über die verwendeten Brennweiten und/oder das digitale dreidimensionale Referenzmodell in einer Datenbank eines Identifizierungsservers abgelegt und bei Bedarf von dort beispielsweise über ein Kommunikationsnetzwerk, wie Internet, abgerufen werden.

Gemäß einer Ausführungsform können die Referenzbilder in einem Chip eines elektronischen Identifikationsdokumentes abgespeichert werden und dort für einen anwendungsspezifischen Referenzvergleich herangezogen werden.

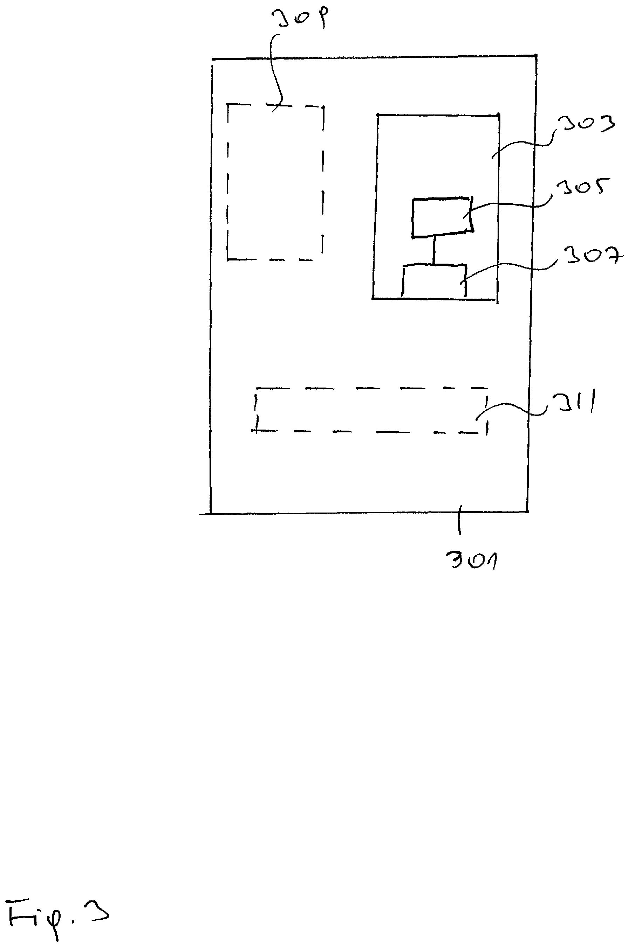

Fig. 3 zeigt schematisch ein derartiges Identifikationsdokument 301 mit einem elektronischen Schaltkreis 303, welcher einen Chip repräsentiert. Der elektronische Schaltkreis 303 hat einen Speicher 305 sowie eine Kommunikationsschnittstelle 307. Der Speicher 305 ist eingerichtet, um das erste Referenzbild sowie um das zweite Referenzbild gemeinsam mit der Angabe der Information über die jeweils verwendete Brennweite bereitzustellen. Die Kommunikationsschnittstelle 307 ist beispielsweise eine NFC-Kommunikationsschnittstelle, welche ein Auslesen des ersten Referenzbildes oder des zweiten Referenzbildes aus dem Speicher 305 ermöglicht. Ansprechend auf den Empfang einer Aufforderung zur Übermittlung eines Referenzbildes kann die Kommunikationsschnittstelle beispielsweise entscheiden, ob das erste Referenzbild oder ob das zweite Referenzbild ausgegeben werden soll. Der empfangenen Aufforderung ist eine Angabe über eine jeweils verwendete Brennweite beigefügt. Damit kann auf der Basis dieser Angabe dasjenige Referenzbild herausgegeben werden, dessen Brennweite am ehesten der empfangenen, bestimmten Brennweite entspricht. So kann beispielsweise für die Bildaufnahme in einer Selfie-Umgebung das erste Referenzbild ausgegeben werden, das eine Weitwinkelaufnahme am ehesten emuliert.

Im Rahmen eines Identifikationsprozesses kann das Identifikationsdokument über die Kommunikationsschnittstelle 307 ebenfalls personifiziert werden, indem die Referenzdaten mit den Referenzbildern sowie Angaben über die Brennweiten sowie optional mit dem dreidimensionalen Referenzmodell beschrieben werden.

Gemäß einer weiteren Ausführungsform kann in dem Speicher 305 ferner ein Profilbild oder ein Normalbild einer Person abgelegt sein. Dieses weitere Bild kann durch beispielsweise einen Beamten ausgelesen werden, um einen traditionellen Personenabgleich vorzunehmen. Das dritte Bild kann beispielsweise ein Halbprofilbild der Person umfassen.

Das Identifikationsdokument 301 kann ferner ein aufgedrucktes Personenbild 309 sowie weitere Daten 311 aufweisen, welche beispielsweise in einer maschinenlesbaren Zone zusammengefasst sind.

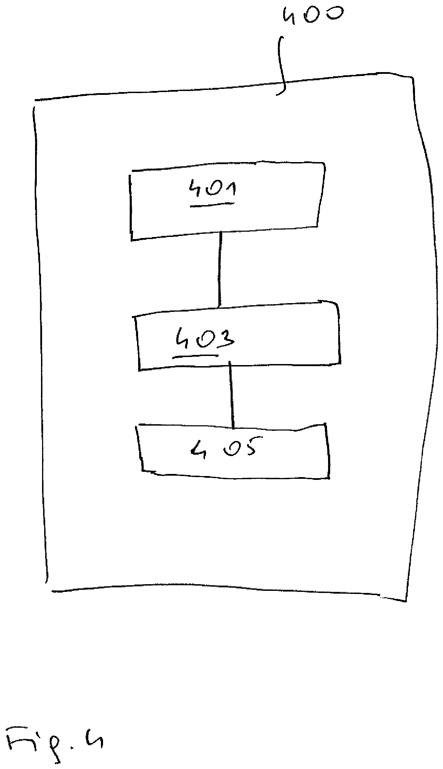

Fig. 4 zeigt schematisch eine Identifikationsvorrichtung 400 zur Identifikation einer Person, beispielsweise der Person 110, anhand eines Identifikationsdokumentes 301, in welchem ein mit einer ersten Brennweite und in einer ersten Entfernung zu der Person aufgenommenes erstes Referenzbild der Person und ein mit einer zweiten Brennweite und in einer zweiten Entfernung zu der Person aufgenommenes zweites Referenzbild der Person gespeichert ist, mit einer Bildkameraanordnung 401 zur Aufnahme eines Bildes der Person mit einer bestimmten Brennweite, um ein aufgenommenes Personenbild zu erhalten, einer Kommunikationsschnittstelle 405 zum Auslesen desjenigen Referenzbildes aus dem Identifikationsdokument, dessen Brennweite der bestimmten Brennweite entspricht, und einem Prozessor 403, welcher ausgebildet ist, das aufgenommene Bild mit dem ausgelesenen Referenzbild zu vergleichen, um die Person zu identifizieren.

Gemäß einer Ausführungsform ist der Prozessor 403 ausgebildet ist, anhand der Tiefeninformation eine Personenlebenderkennung oder eine Presentation-Attack-Erkennung durchzuführen.

Gemäß einer Ausführungsform kann die Identifikationsvorrichtung 400 durch ein mobiles Kommunikationsgerät, insbesondere ein Smartphone, realisiert werden. Die Bildkameraanordnung 401 umfasst in diesem Fall eine Bildkamera des Kommunikationsgerätes, beispielsweise eine Weitwinkel-Bildkamera mit einer Weitwinkel-Brennweite, welche der vorstehend beschriebenen ersten Brennweite entsprechen kann.

Gemäß einer Ausführungsform ist die Bildkameraanordnung 401 ausgebildet, das Bild der Person aus einer ersten Entfernung zwischen der Bildkameraanordnung 401 und der Person aufzunehmen, wobei die Bildkameraanordnung 401 ferner ausgebildet ist, ein weiteres Bild der Person aus einer zweiten Entfernung zwischen der Bildkameraanordnung 401 und der Person mit einer weiteren bestimmten Brennweite aufzunehmen, wobei die bestimmte Brennweite und die weitere bestimmte Brennweite unterschiedlich sind, wobei das Bild der Person und das weitere Bild der Person sich um einen optischen Abbildungsfehler unterscheiden, und wobei der Prozessor 403 ausgebildet ist, eine Tiefeninformation aus dem optischen Abbildungsfehler abzuleiten, wie es vorstehend beschrieben ist.

Die Bildkameraanordnung 401 kann strukturell und funktionell der Bildkameraanordnung 103, 105 entsprechen. Die bestimmte Brennweite und die weitere bestimmte Brennweite könne der ersten Brennweite und der zweiten Brennweite wie vorliegend entsprechen.

Gemäß einer ausführungsform kann die Identifikationsvorrichtung 400 die in den Fig. 1 oder 2 dargestellte Bilderfassungsanordnung umfassen.

### Bezugszeichenliste

- 100: Bilderfassungsvorrichtung
- 101: Gehäuse
- 103: Bildkameraanordnung
- 105: Bildkameraanordnung
- 107: Teilerspiegel
- 109: Öffnung
- 110: Person
- 111: optische Achse
- 113: zweiter Lichtanteil
- 115: erster Lichtanteil
- 117: Kommunikationsschnittstelle
- 119: Prozessor
- 200: Bilderfassungsvorrichtung
- 301: Identifikationsdokument
- 303: elektronischer Schaltkreis
- 305: Speicher
- 307: Kommunikationsschnittstelle
- 309: Personenbild
- 311: Daten

- 400: Identifikationsvorrichtung
- 401: Bildkameraanordnung
- 403: Prozessor
- 405: Kommunikationsschnittstelle

## Patentansprüche

1. Identifikationsdokument (301) zur Identifizierung einer Person (110) mit einem elektronischen Schaltkreis (303) mit einem Speicher (305) und einer Kommunikationsschnittstelle (307), wobei in dem Speicher (305) ein mit einer ersten Brennweite und in einer ersten Entfernung zu der Person (110) aufgenommenes erstes Referenzbild der Person (110) mit der ersten Brennweite und ein mit einer zweiten Brennweite und in einer zweiten Entfernung zu der Person (110) aufgenommenes zweites Referenzbild der Person (110) mit der zweiten Brennweite gespeichert ist, wobei die Kommunikationsschnittstelle (307) ausgebildet ist, entweder das erste Referenzbild oder das zweite Referenzbild auszugeben,
wobei die Kommunikationsschnittstelle (307) ausgebildet ist, eine Aufforderung zur Ausgabe eines Referenzbildes, dem eine bestimmte Brennweite zugeordnet ist, zu empfangen, und wobei die Kommunikationsschnittstelle (307) ausgebildet ist, das erste Referenzbild auszugeben, falls die erste Brennweite der bestimmten Brennweite entspricht, oder das zweite Referenzbild auszugeben, falls die zweite Brennweite der bestimmten Brennweite entspricht.

2. Identifikationsvorrichtung (400) zur Identifikation einer Person anhand eines Identifikationsdokumentes (301), in welchem ein mit einer ersten Brennweite und in einer ersten Entfernung zu der Person aufgenommenes erstes Referenzbild der Person und ein mit einer zweiten Brennweite und in einer zweiten Entfernung zu der Person aufgenommenes zweites Referenzbild der Person gespeichert ist, mit:
einer Bildkameraanordnung (401) zur Aufnahme eines Bildes der Person mit einer bestimmten Brennweite, um ein aufgenommenes Personenbild zu erhalten;
einer Kommunikationsschnittstelle (405) zum Auslesen desjenigen Referenzbildes aus dem Identifikationsdokument (301), dessen Brennweite der bestimmten Brennweite entspricht; und
einem Prozessor (403), welcher ausgebildet ist, das aufgenommene Bild mit dem ausgelesenen Referenzbild zu vergleichen, um die Person zu identifizieren,
wobei die Kommunikationsschnittstelle ausgebildet ist, eine Aufforderung zur Ausgabe eines Referenzbildes zu senden, wobei der Aufforderung eine Angabe über eine jeweils verwendete Brennweite beigefügt ist.

3. Identifikationsvorrichtung (400) nach Anspruch 2, wobei der Prozessor (403) ausgebildet ist, das aufgenommene Bild der Person zu verarbeiten, falls die bestimmte Brennweite sich von der Brennweite des ausgelesenen Referenzbildes unterscheidet, um die Wirkung eines Brennweitenunterschiedes in dem aufgenommenen Bild zu verringern.

4. Identifikationsvorrichtung (400) gemäß Anspruch 2 oder 3, wobei die Bildkameraanordnung (401) ausgebildet ist, das Bild der Person aus einer ersten Entfernung zwischen der Bildkameraanordnung (401) und der Person aufzunehmen, wobei die Bildkameraanordnung (401) ferner ausgebildet ist, ein weiteres Bild der Person aus einer zweiten Entfernung zwischen der Bildkameraanordnung (401) und der Person mit einer weiteren bestimmten Brennweite aufzunehmen, wobei die bestimmte Brennweite und die weitere bestimmte Brennweite unterschiedlich sind, wobei das Bild der Person und das weitere Bild der Person sich um einen optischen Abbildungsfehler unterscheiden, und wobei der Prozessor (403) ausgebildet ist, eine Tiefeninformation aus dem optischen Abbildungsfehler abzuleiten.

5. Identifikationsvorrichtung (400) gemäß Anspruch 4, wobei der Prozessor ausgebildet ist, anhand der Tiefeninformation eine Personenlebenderkennung oder eine Presentation-Attack-Erkennung durchzuführen.

6. Identifikationsvorrichtung (400) gemäß Anspruch 4 oder 5, wobei der Prozessor ausgebildet ist, anhand des Bildes, des weiteren Bildes sowie der Tiefeninformation ein dreidimensionales Personenmodell, insbesondere Kopfmodell, der Person zu erzeugen, und das dreidimensionale Personenmodell mit einem der Person zugeordneten Referenzmodell zu vergleichen.

7. Verfahren zum Personifizieren eines Identifikationsdokumentes (301) einer Person (110), mit:
Aufnehmen eines ersten Bildes der Person (110) mit einer ersten optischen Brennweite in einer ersten optischen Entfernung zu der Person (110), um ein erstes Referenzbild zu erhalten;
Aufnehmen eines zweiten Bildes der Person (110) mit einer zweiten optischen Brennweite in einer zweiten optischen Entfernung zu der Person (110), um ein zweites Referenzbild zu erhalten; und
Speichern des ersten Referenzbildes mit einer Angabe über die erste optische Brennweite und des zweiten Referenzbildes mit einer Angabe über die zweite optische Brennweite auf einem Identifikationsdokument (301) der Person (110), insbesondere in einem Speicher (305) des Identifikationsdokumentes (301), um das Identifikationsdokument (301) zu personifizieren.

8. Verfahren zur Identifikation einer Person (110) anhand eines Identifikationsdokumentes (301), in welchem ein mit einer ersten Brennweite und in einer ersten Entfernung zu der Person (110) aufgenommenes erstes Referenzbild der Person (110) sowie die erste Brennweite und ein mit einer zweiten Brennweite und in einer zweiten Entfernung zu der Person (110) aufgenommenes zweites Referenzbild der Person (110) sowie die zweite Brennweite gespeichert ist, mit:
Aufnehmen eines Bildes der Person (110) mit einer bestimmten Brennweite, um ein aufgenommenes Personenbild zu erhalten;
Senden einer Aufforderung zur Ausgabe eines Referenzbildes an das Identifikationsdokument (301), wobei der Aufforderung eine Angabe über die jeweils verwendete Brennweite beigefügt ist;
Auslesen desjenigen Referenzbildes aus dem Identifikationsdokument (301), dessen Brennweite der bestimmten Brennweite entspricht; und
Vergleichen des aufgenommenen Personenbildes mit dem ausgelesenen Referenzbild, um die Person (110) zu identifizieren.

9. Verfahren nach Anspruch 8, wobei das Bild der Person aus einer ersten Entfernung zu der Person aufgenommen wird, mit:
Aufnehmen eines weiteren Bildes der Person aus einer zweiten Entfernung zu der Person mit einer weiteren bestimmten Brennweite, wobei die bestimmte Brennweite und die weitere bestimmte Brennweite unterschiedlich sind, wobei das Bild der Person und das weitere Bild der Person sich um einen optischen Abbildungsfehler unterscheiden;
Ableiten einer Tiefeninformation aus dem optischen Abbildungsfehler; und
Durchführen einer Personenlebenderkennung oder einer Presentation Attack Detection anhand der abgeleiteten Tiefeninformation.

## Claims

1. An identification document (301) for identifying a person (110) by an electronic circuit (303) with a memory (305) and a communication interface (307), wherein in the memory (305) the following is stored: a first reference image of the person (110) captured with a first focal length at a first distance to the person (110), the first reference image being stored with the first focal length; and a second reference image of the person (110) captured with a second focal length at a second distance to the person (110), the second reference image being stored with the second focal length, wherein the communication interface (307) is configured to output either the first reference image or the second reference image,
wherein the communication interface (307) is configured to receive a request to output a reference image to which a specific focal length is assigned, and wherein the communication interface (307) is configured to output the first reference image if the first focal length corresponds to the specific focal length, or output the second reference image if the second focal length corresponds to the specific focal length.

2. The identification device (400) for identifying a person on the basis of an identification document (301) in which a first reference image of the person captured with a first focal length and at a first distance to the person and a second reference image of the person captured with a second focal length and at a second distance to the person is stored, the identification device (400) comprising:
an image camera arrangement (401) for capturing an image of the person with a specific focal length in order to obtain a captured image of the person;
a communication interface (405) for reading out that reference image from the identification document (301) whose focal length corresponds to the specific focal length; and
a processor (403) which is configured to compare the captured image with the read-out reference image in order to identify the person,
wherein the communication interface is configured to send a request for outputting a reference image, wherein an indication of a respectively used focal length is added to the request.

3. The identification device (400) according to claim 2, wherein the processor (403) is configured to process the captured image of the person, if the specific focal length differs from the focal length of the read-out reference image in order to reduce the effect of a focal length difference in the captured image.

4. The identification device (400) according to claim 2 or 3, wherein the image camera arrangement (401) is configured to capture the image of the person at a first distance between the image camera arrangement (401) and the person, wherein the image camera arrangement (401) is further configured to capture a further image of the person at a second distance between the image camera arrangement (401) and the person with a further specific focal length, wherein the specific focal length and the further specific focal length are different, wherein the image of the person and the further image of the person differ by an optical aberration, and wherein the processor (403) is configured to derive a depth information from the optical aberration.

5. The identification device (400) according to claim 4, wherein the processor is configured to perform a person liveness detection or a presentation attack detection on the basis of the depth information.

6. The identification device (400) according to claim 4 or 5, wherein the processor is configured to generate a three-dimensional person model, in particular head model, of the person by using the image, the further image and the depth information, and to compare the three-dimensional person model with a reference model assigned to the person.

7. A method for personalizing an identification document (301) of a person (110), the method comprising:
capturing a first image of the person (110) with a first optical focal length at a first optical distance to the person (110) in order to obtain a first reference image;
capturing a second image of the person (110) with a second optical focal length at a second optical distance to the person (110) in order to obtain a second reference image; and
storing the first reference image with an indication about the first optical focal length and the second reference image with an indication about the second optical focal length on an identification document (301) of the person (110), in particular in a memory (305) of the identification document (301), in order to personalize the identification document (301).

8. A method for identifying a person (110) on the basis of an identification document (301) in which the following is stored: a first reference image of the person (110) captured with a first focal length at a first distance to the person (110) as well as the first focal length; and a second reference image of the person (110) captured with a second focal length at a second distance to the person (110) as well as the second focal length, the method comprising:
capturing an image of the person (110) with a specific focal length in order to obtain a captured person image;
sending a request for outputting a reference image to the identification document (301), wherein an indication of a respective used focal length is added to the request;
reading out that reference image from the identification document (301) whose focal length corresponds to the specific focal length; and
comparing the captured person image with the read-out reference image in order to identify the person (110).

9. The method of claim 8, wherein the image of the person is captured at a first distance to the person, the method comprising:
capturing a further image of the person at a second distance to the person with a further specific focal length, wherein the specific focal length and the further specific focal length are different, wherein the image of the person and the further image of the person differ by an optical aberration;
deriving a depth information from the optical aberration; and
performing a person liveness detection or a presentation attack detection on the basis of the derived depth information.

## Revendications

1. Document d'identification (301) pour l'identification d'une personne (110), comprenant un circuit électronique (303) doté d'une mémoire (305) et d'une interface de communication (307), une première image de référence de la personne (110), enregistrée avec une première focale et à une première distance de la personne (110), étant mémorisée avec la première focale, et une deuxième image de référence de la personne (110), enregistrée avec une deuxième focale et à une deuxième distance de la personne (110), étant mémorisée avec la deuxième focale dans la mémoire (305), l'interface de communication (307) étant réalisée pour sortir soit la première image de référence soit la deuxième image de référence, l'interface de communication (307) étant réalisée pour recevoir une demande de sortie d'une image de référence à laquelle est associée une focale déterminée, et l'interface de communication (307) étant réalisée pour sortir la première image de référence si la première focale correspond à la focale déterminée, ou pour sortir la deuxième image de référence si la deuxième focale correspond à la focale déterminée.

2. Dispositif d'identification (400) pour l'identification d'une personne à l'aide d'un document d'identification (301) sur lequel sont mémorisées une première image de référence de la personne, enregistrée avec une première focale et à une première distance de la personne, et une deuxième image de référence de la personne, enregistrée à une deuxième focale et à une deuxième distance de la personne, comprenant :
un ensemble de caméra d'imagerie (401) pour enregistrer une image de la personne avec une focale déterminée afin d'obtenir une image de personne enregistrée ;
une interface de communication (405) pour lire sur le document d'identification (301) l'image de référence dont la focale correspond à la focale déterminée ; et
un processeur (403) qui est réalisé pour comparer l'image enregistrée avec l'image de référence lue afin d'identifier la personne,
l'interface de communication étant réalisée pour envoyer une demande de sortie d'une image de référence, la demande étant accompagnée d'une indication concernant la focale respectivement utilisée.

3. Dispositif d'identification (400) selon la revendication 2, dans lequel le processeur (403) est réalisé pour traiter l'image enregistrée de la personne si la focale déterminée est différente de la focale de l'image de référence lue afin de diminuer l'effet d'une différence de focale sur l'image enregistrée.

4. Dispositif d'identification (400) selon la revendication 2 ou 3, dans lequel l'ensemble de caméra d'imagerie (401) est réalisé pour enregistrer l'image de la personne à partir d'une première distance entre l'ensemble de caméra d'imagerie (401) et la personne, l'ensemble de caméra d'imagerie (401) étant en outre réalisé pour enregistrer une autre image de la personne à partir d'une deuxième distance entre l'ensemble de caméra d'imagerie (401) et la personne avec une autre focale déterminée, la focale déterminée et l'autre focale déterminée étant différentes, la différence entre l'image de la personne et l'autre image de la personne étant une aberration optique, et le processeur (403) étant réalisé pour déduire une information de profondeur à partir de l'aberration optique.

5. Dispositif d'identification (400) selon la revendication 4, dans lequel le processeur est réalisé pour effectuer une détection de caractère vivant d'une personne ou une détection d'attaque de présentation à l'aide de l'information de profondeur.

6. Dispositif d'identification (400) selon la revendication 4 ou 5, dans lequel le processeur est réalisé pour produire à l'aide de l'image, de l'autre image ainsi que de l'information de profondeur un modèle de personne tridimensionnel, en particulier un modèle de tête de la personne, et pour comparer le modèle de personne tridimensionnel avec un modèle de référence associé à la personne.

7. Procédé de personnalisation d'un document d'identification (301) d'une personne (110), comprenant les étapes consistant à :
enregistrer une première image de la personne (110) avec une première focale optique à une première distance optique de la personne (110) afin d'obtenir une première image de référence ;
enregistrer une deuxième image de la personne (110) avec une deuxième focale optique à une deuxième distance optique de la personne (110) afin d'obtenir une deuxième image de référence ; et
mémoriser la première image de référence avec une indication concernant la première focale optique et la deuxième image de référence avec une indication concernant la deuxième focale optique sur un document d'identification (301) de la personne (110), en particulier dans une mémoire (305) du document d'identification (301) afin de personnaliser le document d'identification (301).

8. Procédé d'identification d'une personne (110) à l'aide d'un document d'identification (301) sur lequel sont mémorisées une première image de référence de la personne (110), enregistrée avec une première focale et à une première distance de la personne (110), ainsi que la première focale, et une deuxième image de référence de la personne (110), enregistrée avec une deuxième focale et à une deuxième distance de la personne (110), ainsi que la deuxième focale, comprenant les étapes consistant à :
enregistrer une image de la personne (110) avec une focale déterminée afin d'obtenir une image de personne enregistrée ;
envoyer une demande de sortie d'une image de référence au document d'identification (301), la demande étant accompagnée d'une indication concernant la focale respectivement utilisée ;
lire l'image de référence sur le document d'identification (301) dont la focale correspond à la focale déterminée ; et
comparer l'image de personne enregistrée avec l'image de référence lue afin d'identifier la personne (110).

9. Procédé selon la revendication 8, dans lequel l'image de la personne est enregistrée à une première distance de la personne, comprenant les étapes consistant à :
enregistrer une autre image de la personne à une deuxième distance de la personne avec une autre focale déterminée, la focale déterminée et l'autre focale déterminée étant différentes, la différence entre l'image de la personne et l'autre image de la personne étant une aberration optique ;
déduire une information de profondeur à partir de l'aberration optique ; et
effectuer une détection de caractère vivant d'une personne ou une détection d'attaque de présentation à l'aide de l'information de profondeur déduite.
